# EUROPEAN PATENT APPLICATION

(11) **EP 2 460 935 A1**
(43) Date of publication of application: **06.06.2012**
(21) Application number: 10193228.3
(22) Date of filing: 01.12.2010
(51) Int. Cl.: D21H 17/01, D21H 17/67, D21H 19/38, C01F 11/46, C09C 1/02

(54) **Method for the production of calcium sulfate dihydrate based paper substrates and/or coating colours**

(71) Applicant: SAPPI Netherlands Services B.V., 6211 AA Maastricht (NL)
(72) Inventor: The designation of the inventor has not yet been filed
(74) Representative: Bremi, Tobias Hans

(57) **Abstract**

The present invention relates to a method for making a fibre-based substrate such as paper of board, which as filler particles or as a coating colour pigment constituent comprises calcium sulfate dihydrate pigment. According to the method, the calcium sulfate dihydrate pigment is introduced into the papermaking/coating process as a calcium sulfate dihydrate pigment slurry for the formation of the paper web and/or its coating formulation. In order to avoid losses due to dissolution of the pigment, it is proposed for the preparation of said calcium sulfate dihydrate pigment slurry to use a powdery calcium sulfate dihydrate pigment or a calcium sulfate dihydrate pigment starting slurry and to dilute it with water which is essentially presaturated in calcium sulfate dihydrate.

## Description

### TECHNICAL FIELD

The present invention relates to a method for making a fibre-based paper substrate, which as filler particles and/or coating colour pigment constituent comprises calcium sulfate dihydrate pigment.

### PRIOR ART

To produce paper substrate of board, an aqueous suspension containing fibers, filler particles and additives, which suspension is also referred to as a stock, is provided in a papermaking machine. The stock is fed into a headbox which ejects the stock onto a forming wire through a slice opening in the papermaking machine. Water is drained from the stock through the forming wire so that a wet paper web is formed on the wire. The wet paper web is thereafter dewatered and dried in the drying section of the papermaking machine. Retention agents are usually introduced into the stock in order to improve the retention, e.g. via induced flocculation of the fine particles together with the fibres. However, due to incomplete retention, the water obtained by dewatering the stock and the wet web, referred to as whitewater or back water, contains fine particles not being retained on the paper web. The whitewater is either recycled or discarded after treatment.

Fillers are inert and finely-divided materials, most commonly minerals, that are mainly used to fill spaces between cellulose fibers so as to improve the quality of paper and lower the quantity of cellulose fibers that needs to be used. They are commonly less expensive than wood fibers. Therefore, the advantages of incorporating filler particles in the stock comprise lower furnish cost, more efficient fiber resource use as well as improved optical and physical properties. Examples of these improved properties are printability, opacity, brightness, whiteness, softness, smoothness, etc. Conversely, fillers may weaken paper strength e.g. by interfering with fiber-fiber bonding. The possibility of increased pressroom breaks is usually a factor limiting the use of fillers.

Several different mineral fillers have hitherto been used by the paper industry.

Among them, the most commonly-used mineral fillers are calcium carbonate, clay, titanium oxide and talc. Typical level of filler addition ranges from 5 to 40% by weight of the dry paper.

Gypsum or calcium sulfate dihydrate CaS0₄·2H₂O is suitable as material for both coating pigment and filler, especially in paper products. An especially good coating pigment and filler is obtained if the particular gypsum has high brightness, gloss and opacity. The gloss is high when the particles are sufficiently small, flat and broad (platy). The opacity is high when the particles are refractive, small and of equal size (narrow particle size distribution). So calcium sulfate dihydrate forms can be ideal filler candidates in papermaking, although their physical and chemical properties are different from any other conventional filler. Calcium sulfate dihydrate fillers are known to provide improved optical properties and a moderate strength loss. Their crystal form and crystal size can also be easily modified. Gypsum is a naturally-occurring and widely-available mineral mainly consisting of calcium sulfate dihydrate, which is one of the calcium sulfate forms. Although finely ground natural gypsum has been used in the past as a filler for paper, its use often has many drawbacks, such as high impurities content, relatively low brightness and low particle fineness, considerable solubility, small specific surface area and poor retention in the paper web. More recently, attempts have been made to utilize precipitated tabular acicular calcium sulfate dihydrate to improve the bottleneck of insufficient filler retention, and significantly improve the optical properties, but solubility is still a concern.

It should be noted that gypsum also exists as a by-product of a chemical process, often as a waste product, termed chemical gypsum, for example as by-product from the manufacture of phosphoric acid out of phosphatic rock, often referred to as "chemical gypsum" or "phosphogypsum". Such a "chemical gypsum" or "flue-gas gypsum" can also be obtained as a by-product from flue gas cleaning processes.

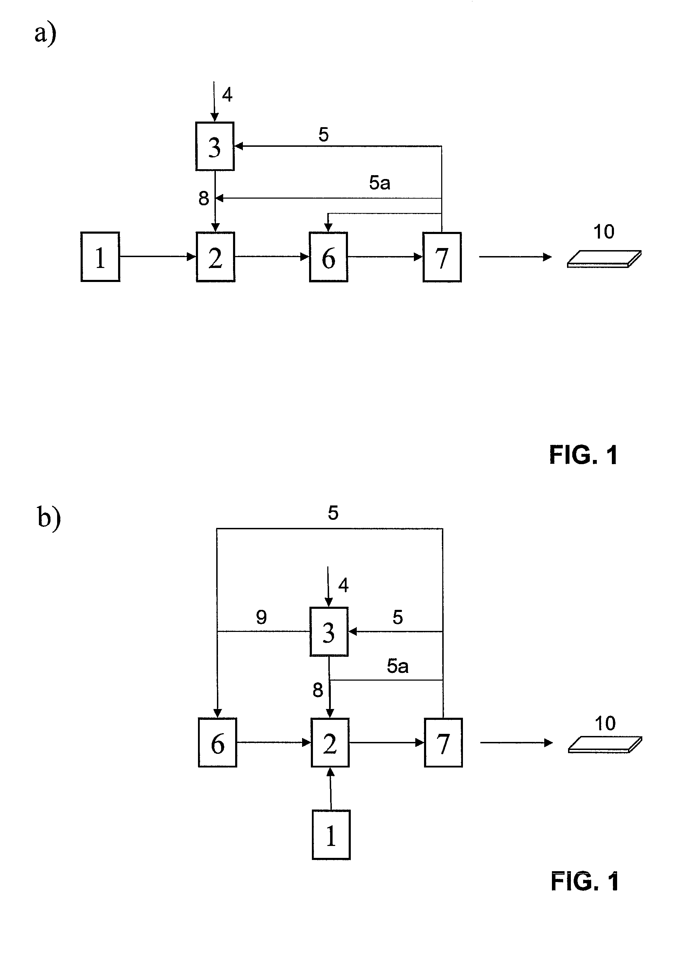

Gypsum, occurring as a natural mineral or formed as a by-product of chemical processes, e.g. as phosphogypsum or flue gas gypsum, must be refined for use as a filler or coating pigment. In order to refine the gypsum further by crystallising it into coating pigment or filler, it must first be calcined into calcium sulfate hemihydrate (CaS0₄ ¹/₂ H₂O), or water soluble calcium sulfate anhydride, after which it may be hydrated back by dissolving the hemihydrate or anhydride in water and crystallization precipitating to give pure gypsum. Specifically, calcium sulfate is known to exist in several different forms: calcium sulfate dihydrate or gypsum (CaSO₄ 2·H₂O), calcium sulfate hemihydrate (CaSO₄ 1/2·H₂O) and calcium sulfate anhydride (CaSO₄). During the calcination of calcium sulfate dihydrate at 120-180 C, the substance loses 1.5 mol per mol of its crystal water and calcium sulfate hemihydrate is formed. When water is added to the calcium sulfate hemihydrate, the calcium sulfate hemihydrate binds the missing crystal water and can recrystallize into calcium sulfate dihydrate. Calcium sulfate hemihydrate at high temperature loses its full residual crystal water and forms calcium sulfate anhydride. At very high temperature anhydrate loses sulfur dioxide and oxygen and ends up as calcium oxide. The chemical equations illustrated in FIG. 1 of WO 03/016216 summarize the above.

The intrinsic solubility of calcium sulfate dihydrate in water is indeed an important issue since during the papermaking, a substantial amount of calcium sulfate dihydrate filler, also if deposited (crystallization) on fibres or fibre noils, is dissolved and cannot be retained by the paper web. As a result, the losses of material are significant when used as a filler in papermaking. Essentially the same holds true if calcium sulfate dihydrate is used as a pigment constituent of a normally aqueous coating formulation for a coated paper.

From the above WO 03/016216 deduces that there is the need of reducing the solubility of calcium sulfate dihydrate, more particularly that there is a need of providing calcium sulfate dihydrate particles having a reduced solubility and solubility rate in an aqueous suspension, and for a method of making such suspension and particles in a simple, fast and economical way using only a small amount of inorganic components, as well as for a method of producing calcium sulfate dihydrate particles for use as a filler in papermaking, which particles have a small size and a shape providing a high filler retention, good bonding in the paper web and less potential linting problems in the pressroom. In this document the solution to this is proposed to be the addition of calcium chelating agent to a suspension of calcium sulfate dihydrate, specifically systems such as sodium-hexametaphosphate. However in practice one notes that as a matter of fact the addition of the chelating agents proposed in WO 03/016216, in particular the hexametaphosphate, do not effectively reduce the solubility under all conditions, quite to the contrary, they sometimes even increase the solubility.

Calcium sulfate dihydrate is the only moderately priced high-brightness pigment that can also be used in acid papermaking conditions, next to the regular basic papermaking conditions. Because this form is rather soluble in water (at 20°C, the solubility of calcium sulfate dihydrate is about 2,4 g/l (in pure water), which equals about 560mg/l as a calcium ion concentration) pigment is normally lost via process water effluent. This is economically a significant drawback and raises the paper production costs. The solubility of calcium sulfate dihydrate shows a weak temperature dependence, going up to e.g. 640 mg/l as calcium ion concentration at about 47°C) and according to today's knowledge can not economically/environmentally friendly/significantly be decreased via additional treatment or any practical measure.

### SUMMARY OF THE INVENTION

This is where the present invention provides remedy and a new solution. The new idea is to pre-saturate process waters for example with cheap and abundant available sufficiently pure/clean calcium sulfate dihydrate, as e.g. available as byproduct of industrial processes such as chemical gypsum, phosphogypsum or flue gas gypsum as outlined above, in (paper) processes where more expensive partly water soluble pigments are being used such as for example GCS (ground calcium sulfate dihydrate), PCS (precipitated calcium sulfate dihydrate) and fiber-calcium sulfate dihydrate pigment filler composites or fibre noils-calcium sulfate dihydrate pigment filler composites thereof. In this way one does not ineffectively and uneconomically lose the more precious calcium sulfate dihydrate based pigment to the process water or white water flows concerned, because they are already presaturated in calcium sulfate dihydrate, and thus one can save appreciable money and in addition avoid environmental concerns and also provide a more stable production process. Indeed a process where the Ca ion content is stable (which it automatically is if it is presaturated in calcium ions), even if it is high, is considerably easier to control than a comparable process where the Ca ion levels in the respective process whitewater loops are significantly varying.

The proposed approach is contrary to what has hitherto been proposed in the field, as for example WO 03/016216 expressly teaches away by stating that the high concentration of calcium sulfate dihydrate also increases the calcium ion and sulfate ion content of the whitewater and the effluent which allegedly requires the whitewater and the effluent to be diluted, typically between 2 to 5 times, to avoid deposit formation like gypsum scaling. It was surprisingly found that these concerns are actually not justified at all and in contrast to the proposals according to the state-of-the-art, i.e. to introduce specific additives in order to reduce the solubility of calcium sulfate dihydrate, in accordance with the present invention its dissolution is avoided or at least substantially reduced by introducing the calcium sulfate dihydrate pigment which is to remain in the final products (either as a filler or as a coating colour constituent) into an aqueous medium which is already presaturated in calcium ions such that further dissolution of the precious calcium sulfate dihydrate pigment is effectively avoided or at least substantially reduced.

So one of the aspects of the new process is not to reduce the intrinsic solubility property of calcium sulfate dihydrate itself but to pre-saturate the relevant process waters in the papermaking process equipment with inexpensive and rather pure chemical gypsum such as phosphogypsum or flue gas gypsum before these waters meet the relatively expensive processed calcium sulfate dihydrate pigment, either as a pigment constituent alone or deposited onto fibres. When the process water that comes in contact with the relatively precious processed calcium sulfate dihydrate pigment is already presaturated in calcium sulfate dihydrate, essentially no more dissolving can take place and therefore one does not lose nearly any of the more expensive calcium sulfate dihydrate pigment via process water effluent.

Indeed it was found that even when the process according to the invention was used over extended periods of time there was no problem with the predissolved calcium sulfate dihydrate, so no troublesome gypsum scalings/incrustations and negative interactions of the high Ca-ion concentration with other components in use within the wet end or coating system could be observed at all. It appears that there are no harmful interactions in the wet end or coating colour. If deposits were found, this is as a matter of fact not gypsum but (less soluble) calcium oxalate. The oxalic acid origins mainly from wood and is e.g. released in the bleaching of mechanical fibres. The calcium oxalate deposits can be identified easily in the mill with IR-analysis and the deposits are efficiently removed when needed with boil-outs.

More specifically, the present invention proposes a method for making a fibre-based substrate such as a paper substrate or board or another substrate made in an aqueous environment, which as filler particles or as coating colour pigment constituent (or both) comprises calcium sulfate dihydrate pigment.

In such a process, typically the calcium sulfate dihydrate pigment is introduced into the making process (e.g. the papermaking or boardmaking process) as a calcium sulfate dihydrate pigment slurry (either with or without further pigment and/or fibre constituents and/or binder and/or additive constituents) for the formation of the substrate (e.g. the paper web or board) and/or its coating formulation.

Also possible is the use of the proposed method in the situation of a substrate comprising calcium sulfate dihydrate pigment in a combined constituent, namely where the calcium sulfate dihydrate pigment is deposited, in-situ or on-site, onto the fibres or onto the fibre noils to form a so called composite type filler. In case of such a composite type filler the calcium sulfate dihydrate pigment is introduced into the making process as a slurry comprising the fibres or fibre noils with the calcium sulfate dihydrate pigment particles deposited thereon.

In accordance with the present invention, for the preparation of said calcium sulfate dihydrate pigment slurry a powdery calcium sulfate dihydrate pigment or a (typically but not necessarily high solids content) calcium sulfate dihydrate pigment starting slurry is diluted with water which is essentially presaturated in calcium sulfate dihydrate or close to the point of saturation in calcium sulfate dihydrate .

As stated above the solubility of calcium sulfate dihydrate in pure water is 2.4 g/l at 20°C, which implies the known solubility product value of 2.445•10⁻⁵ (mol/l)² at 25°C, and the concentration product of Ca ions and sulfate ions is thus preferably not more than 30 % below the this value, preferably not more than 20% or 15 % below this value. This means that the water is equivalently loaded with calcium sulfate dihydrate by the corresponding percentages below the above mentioned 2..4 g/1.

Equivalently in case of use of the above-mentioned composite type filler, a slurry comprising the fibres or fibre noils with the calcium sulfate dihydrate pigment particles deposited thereon is made and/or diluted using water which is essentially presaturated in calcium ions and sulfate ions or close to the point of saturation of the product of these ions. Such a composite type filler can e.g. be made is a process as described in WO 02/092909 or also in WO 2010/018301 involving the following steps:
1. A side stream of fibres (either cellulose or mechanical) is taken of from the papermills process at low solids.
2. This side stream is dewatered to higher solids.
3. Calcium sulfate dihydrate, calcium sulfate hemihydrate or anhydride powder is added.
4. The calcium sulfate deposits as Calcium sulfate dihydrate onto the fibres (crystallization precipitation), and the composite type filler is formed in a reactor.
5. The water from step 2 is added to the composite flow so one gets back to close to original solids.
6. The now diluted composite flow is added back to the main stream, e.g. at the same place where the side stream was taken out.

Essentially the same process and principles can be used in such a process, namely in that e.g. in above step 5. the filtrate taken from the initial pulp stream for the adjustment of the solids is presaturated with chemical gypsum to avoid the dissolving of the composite from the fibre surface. Chemical gypsums such as phospo gypsum or flue gas gypsum can for example be used for the pre-saturation of the process water flows concerned and e.g. just be tipped in a separate filler hopper. From there the chemical gypsum can e.g. be fed to a filler disperser where process water can be presaturated, there are however many ways to mix such chemical gypsum and incoming and/or circulating process waters.

According to a preferred embodiment of the process, the pre-saturated water has a calcium ion content of more than 400 ppm by weight, preferably of more than 500 ppm or 550 ppm by weight. Most preferably, a calcium content in the range of above 560-640 ppm by weight is used.

Preferably for the pre-saturation of the process waters in calcium sulfate dihydrate, specifically chemical gypsum, is used. In this case, according to yet another preferred embodiment, in the calcium sulfate dihydrate pre-saturated water its content in calcium sulfate dihydrate is larger than or equal to 2.0 g/l preferably larger than or equal to 2.1 g/l and up to 2.4 g/l at 20°C.

Typically the calcium sulfate dihydrate pigment, so the pigment which is to remain in the final products either as a filler constituent and/or as a coating colour pigment constituent has an average particle size in the range of 0.2-5 µ, preferably in the range of 0.5-2 µ. These values as well as the particle size distribution value as given here and further below are typically measured using laser diffraction techniques such as for example available via the use of a Malvern Mastersizer 2000-Wet Dispersion device. Preferably it is a ground and/or precipitated calcium sulfate dihydrate pigment with a brightness of more than 90%, preferably in the range of 94-98%. According to yet another preferred embodiment, the calcium sulfate dihydrate pigment has a particle size distribution such that at least 90% of the particles are smaller than 10 µ, preferably at least 90% of the particles are smaller than 6 µ.

Preferentially, a cheap and environmentally friendly source is used for the presaturation in calcium ions and/or sulfate ions. Sources of calcium ions, as long as these raw materials involved are sufficiently water soluble, are preferably abundant available and harmless. Possible materials for providing effective calcium ion concentrations are for example the highly soluble systems: Ca(OH)₂, i.e. slaked lime or hydrated lime or slack lime (via mixing CaO with water). Other possibilities are CaCl₂, Ca(N0₃)₂. Sources of sulfate ions can be Na₂(SO₄), K₂(SO₄). Further possible is the use of calcium sulfate hemihydrate or water soluble calcium sulfate anhydride. In all these cases presaturation concentrations of calcium ions and sulfate ions are optimally established such that the their mathematical product of the molar ion concentrations is about the above mentioned solubility product. Preferentially for the presaturation of the water used for the preparation of the slurry a chemical gypsum is used. Typically this, typically not ground calcium sulfate dihydrate is used directly as derived essentially without or only with minor purification and/or posttreatment such as recrystallisation, precipitation, grinding, filtering or the like as a byproduct from the manufacture of phosphoric acid out of phosphatic rock or from flue gas cleaning processes.

According to yet another preferred environment, such a chemical gypsum used for the presaturation of the water has an average particle size of more than 10 µ, preferably of more than 20 µ, even more preferably in the range of 30 - 70 µ. In other words this is material which normally is not useful and suitable as a filler material or as a coating colour pigment constituent.

The chemical gypsum used for the presaturation of the water according to yet another preferred embodiment has a particle size distribution such that at most 90% of the particles are smaller than 20 µ, preferably such that at most 90% of the particles are smaller than 100 µ.

Apart from the fact that such a chemical gypsum source is less pure than the calcium sulfate dihydrate pigment used for the final products and comprises for example higher amounts of residual titanium, iron, copper etc it also has a different ratio of calcium to sulfate (on an atom weight basis). Typically the overall weight ratio of calcium atoms to sulfur atoms of the calcium sulfate dihydrate pigment is smaller than the one of the chemical gypsum. According to yet another preferred embodiment therefore, the calcium sulfate dihydrate pigment has a weight ratio of calcium to sulfur in the range of the theoretical value of 0.8, i.e. of more than 1:0.7, preferably of more than 1:0.75, more preferably in the range of 1:(0.72-0.8) (meaning in the range of 1:0.72 to 1:0.8) and the chemical gypsum has a weight ratio of calcium to sulfur of less than 1:0.7, often of less than 1:0.65, or in the range of 1:(0.62-0.68) (meaning in the range of 1:0.62 to 1:0.68). Preferentially, the water essentially presaturated in calcium sulfate dihydrate used for the preparation of the diluted slurry is circulating water of the paper machine which, prior to its use for the preparation of said calcium sulfate dihydrate pigment slurry is presaturated in calcium sulfate dihydrate. In the alternative or in addition to that, this water presaturated in calcium sulfate dihydrate can be freshwater introduced into the system which, prior to its introduction into the circulating water cycle or prior to its use for the preparation of said calcium sulfate dihydrate pigment slurry is presaturated in calcium ions and sulfate ions. As an alternative, the water essentially presaturated in calcium ions and sulfate ions can also be prepared in that coated broke comprising calcium sulfate dihydrate is used for the presaturation of the water.

Typically the high solids content calcium sulfate dihydrate pigment starting slurry has a dry solids content of more than 50%, preferably of more than 60%, most preferably of more than 65%. Normal are dry solids content in the range of 60-90%, preferably in the range of 65-70%.

Typically, a coating colour for a coated paper according to the present invention comprises at least one calcium sulfate dihydrate pigment (precipitated and/or ground), preferably in at least 10 parts in dry weight, more preferably in at least 15 parts in dry weight, most preferably in the range of 60-85 parts in dry weight of the total 100 parts in dry weight of the coating pigment fraction. The rest of the pigment fraction making up the hundred parts in dry weight of the coating pigment fraction can comprise or be constituted by further pigments such as Kaoline, calcium carbonate (precipitated and/or ground), plastic pigments, titanium pigments, silica pigment such as silica gel, silica sol or precipitated silica. Apart from this, typically the coating colour comprises a binder and additives. Preferentially in accordance with another aspect of the invention, for the making of such a coating colour water which is essentially presaturated in calcium sulfate dihydrate is used. Typically in case of the use of calcium sulfate dihydrate as a filler for the substrate (as calcium sulfate dihydrate particles or as calcium sulfate dihydrate pigment crystallized on to fibres or fibre noils), at least 5 parts in dry weight, more preferably in at least 8 parts, normally up to 40 parts or up to 25 parts, most preferably in the range of 10-15 parts in dry weight of the total 100 parts in dry weight of the substrate are given by calcium sulfate dihydrate filler.

According to yet another aspect of the invention, for the making of a fibre-based paper substrate with filler comprising (or constituted by) calcium sulfate dihydrate pigment, the calcium sulfate dihydrate pigment for the filler is introduced into the papermaking process of the substrate as a calcium sulfate dihydrate pigment slurry diluted with water which is essentially presaturated in calcium sulfate dihydrate.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: in a) and b) shows two possible schematic flow diagrams of the process according to the invention;

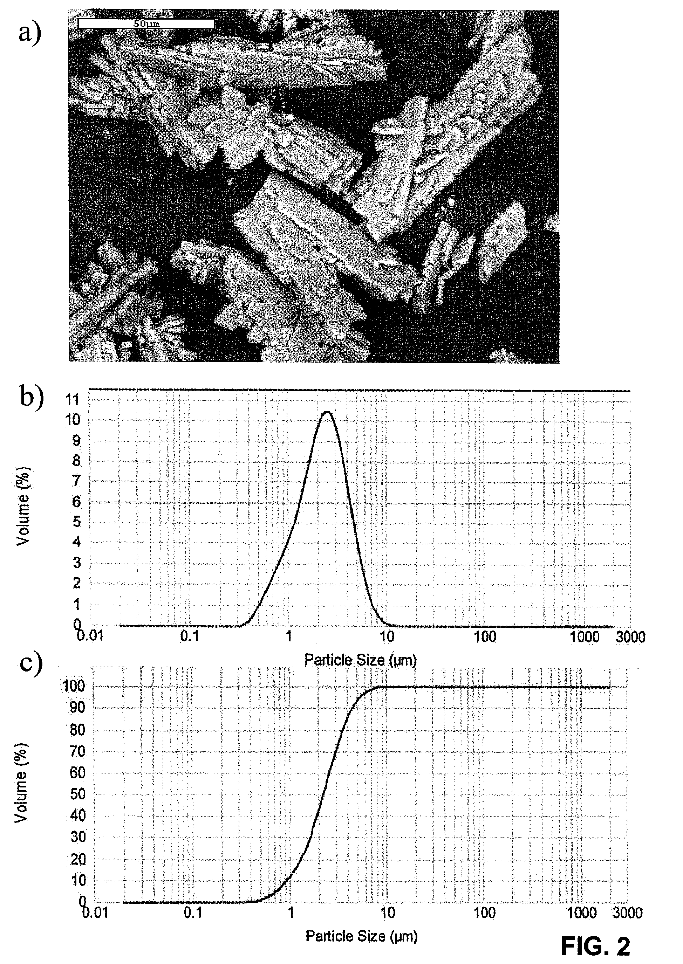

- Fig. 2: shows in a) a SEM picture of a slurry of a calcium sulfate dihydrate (ground type) pigment to be used as a filler or as a coating colour constituent, in b) the corresponding particle size distribution (percentage of particles as a function of their size) and in c) the cumulative particle size distribution (percentage of particles smaller than a certain size value); and

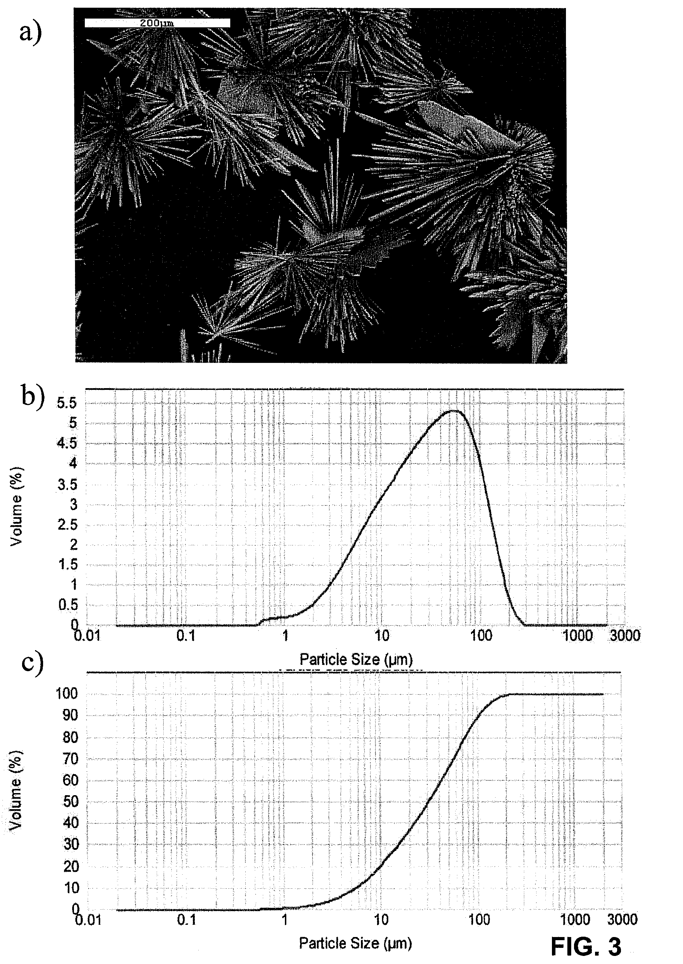

- Fig.3: shows in a) a SEM picture of a slurry of a chemical gypsum derived as a byproducts of phosphoric acid production process, in b) the corresponding particle size distribution (percentage of particles as a function of their size) and in c) the cumulative particle size distribution (percentage of particles smaller than a certain size value).

### DESCRIPTION OF PREFERRED EMBODIMENTS

Figure 1 shows, schematically, the individual steps of the proposed process, wherein in a) a situation is shown, in which the calcium sulfate dihydrate slurry (diluted) is first prepared and then added to the further constituents of the filler/pulp/coating colour, and in b) a situation is shown, in which the calcium sulfate dihydrate slurry (diluted) is added to the prepared pulp and/or coating colour prior to the introduction into the wire section/coating unit. For the sake of avoiding unnecessary duplication of figures the situation of the use of the process for the generation of a filler and for the generation of a coating colour is combined in these figures.

According to figure 1a a source 1 of calcium sulfate dihydrate pigment is provided. This source of the pigment which will be part of the final product (i.e. either of the raw paper substrate or of the coating layers thereon) is either provided to the paper mill in the form of a powder or of a high solids content slurry. Typically such a slurry has a solids content in the range of 65-70% in case of ground calcium sulfate dihydrate pigment of high brightness (around 97% brightness).

On the other hand in a unit 3 for the preparation of pre-saturated water, freshwater intake 4 and/or recirculated water 5, recirculated from the wire section or coating section 7, as the case may be, is used for the making of pre-saturated water 8 for the preparation of a calcium sulfate dihydrate pigment slurry of lower solids content in unit 2. The unit 3 for the preparation of pre-saturated water is provided with chemical gypsum, e.g. phosphogypsum, and for example the supernatant of a chemical gypsum slurry is pumped along line 8 and introduced into unit 2.

Due to the use of water preferably 100% pre-saturated in calcium sulfate dihydrate in unit 2 essentially no further dissolution of the precious calcium sulfate dihydrate pigment provided from unit 1 takes place so there is no loss. This highly efficiently generated lower solids content calcium sulfate dihydrate slurry is subsequently introduced into unit 6 in which further pigments and/or additives and/or fibre constituents (in case of generation of the pulp) are added and mixed in. These constituents can be introduced into the process as solids or slurries.

If this resulting slurry coming out of unit 6 is now structured as a pulp, it is introduced into the headbox/wire section 7.

If this resulting slurry coming out of unit 6 is structured as a coating colour, it is introduced into a coating section of the paper machine 7.

The final result will in any case be a paper 10 or a board or a coated paper.

Using the conventional preparation of ground calcium sulfate dihydrate based filler without pre-saturated water one typically loses up to 10% or even more of the used ground calcium sulfate dihydrate filler pigment, which from a practical papermaking point of view is substantial. This loss of the precious calcium sulfate dihydrate pigment can essentially completely be avoided or essentially reduced by using the proposed process as essentially the presaturation takes place not by use of the precious calcium sulfate dihydrate pigment but by the chemical gypsum, providing inter-alia a new and environmentally friendly possibility of using chemical gypsum which previously e.g. had to be discarded to the environment as being of no use (landfarming).

The process may also be somewhat different as illustrated in figure 1b. Here in a first step in case of the use of the process for a calcium sulfate dihydrate type filler the pulp is prepared without the calcium sulfate dihydrate pigment part in unit 6. The calcium sulfate dihydrate pigment is introduced into this pre-prepared pulp in unit 2 essentially as a last constituent together with further feed of pre-saturated water 8.

Depending on the circumstances and the degree of pre-saturation of the recirculated water streams 5, this input of pre-saturated water 8 into unit 2 can be adapted, and so can be the use of pre-saturated water for the preparation of the initial pulp in unit 6. If for the preparation of the initial pulp in unit 6 already calcium sulfate dihydrate pre-saturated water is used, i.e. via line 9, it may even be possible avoid introduction by a line 8. Depending on the degree of pre-saturation of the recirculated water also recirculation along lines 5a and 5 may be desirable. Again the result of this process is then a pulp introduced into the wire section/headbox 7 finally resulting in a paper 10.

For the case of the preparation of the coating colour, in unit 6 essentially the coating colour with the exception of the calcium sulfate dihydrate pigment part takes place (for example including further pigments such as calcium carbonate, Kaoline, silica pigments, etc as well as binder and additives), and the unit 7 is then the coating unit of a paper machine and the resulting paper a coated paper 10.

Figure 2 shows in a) a SEM picture of a calcium sulfate dihydrate pigment slurry how it is typically used for a filler or as a coating colour constituent (ground calcium sulfate dihydrate pigment, solids content 67%, brightness 95%, average particle size 1 µm) and figure 3 a corresponding SEM picture of chemical gypsum, i.e. not ground calcium sulfate dihydrate which is the by-product of phosphoric acid production. Here one can see that particle shape as well as particle size of these two systems are an order of magnitude apart, and one can see that the chemical gypsum would normally not be suitable for filler and/or coating colour applications e.g. due to its size. This is also illustrated by the respective particle size distributions, illustrated in figures 3 b) and c) (cumulative) and figures 4 b) and c) (cumulative), respectively. These values were measured by laser diffraction techniques using a Malvern Mastersizer 2000-Wet Dispersion device. The characteristics of the distribution according to figure 3 b) and c) are given as follows: d(0.1): 0.93 µm, d(0.5): 2.26 µm, d(0.9): 4.5 µm, the surface weighted mean is 1.78 µm and the volume weighted mean is 2.54 µm. The characteristics of the distribution according to figure 4 b) and c) are given as follows: d (0.1): 5.6 µm, d (0.5): 31.3 µm, d(0.9): 106.1 µm, the surface weighted mean is 12.9 µm and the volume weighted mean is 45.5 µm.

### LIST OF REFERENCE SIGNS

- 1: Source of calcium sulfate dihydrate pigment (high solids content slurry or powder)
- 2: preparation of calcium sulfate dihydrate pigment slurry
- 3: preparation of water presaturated with calcium sulfate dihydrate
- 4: freshwater
- 5: recirculated water from wire section and/or coating unit
- 5a: direct feed
- 6: introduction of further pigments and/or additives and/or fibre constituents
- 7: headbox/wire section/coating unit
- 8: calcium sulfate dihydrate presaturated water
- 9: calcium sulfate dihydrate presaturated water line to 6
- 10: paper

## Claims

1. Method for making a fibre-based substrate, which as filler particles and/or coating colour pigment constituent comprises calcium sulfate dihydrate pigment, wherein the calcium sulfate dihydrate pigment is introduced into the process as a calcium sulfate dihydrate pigment slurry and/or deposited onto the fibres or the fibre noils, for the formation of the substrate and/or its coating formulation,
wherein for the preparation of said calcium sulfate dihydrate pigment slurry and/or of the slurry based on calcium sulfate dihydrate pigment deposited onto the fibres or the fibre noils, a powdery calcium sulfate dihydrate pigment and/or a calcium sulfate dihydrate pigment starting slurry and/or a fibre suspension with the calcium sulfate dihydrate pigment deposited onto the fibres or the fibre noils is diluted with water which is essentially presaturated in calcium sulfate dihydrate.

2. Method according to claim 1 for making a fibre-based paper or board substrate, wherein the calcium sulfate dihydrate pigment is introduced into the process as a calcium sulfate dihydrate pigment slurry for the formation of the substrate and/or its coating formulation, and wherein for the preparation of said calcium sulfate dihydrate pigment slurry a powdery calcium sulfate dihydrate pigment or a, preferably high solids content, calcium sulfate dihydrate pigment starting slurry is diluted with water which is essentially presaturated in calcium sulfate dihydrate.

3. Method according to claim 1 or 2, wherein the water has a calcium content of more than 400 ppm by weight, preferably of more than 500 ppm or 640 ppm by weight.

4. Method according to any of the preceding claims, wherein in the water essentially presaturated in calcium sulfate dihydrate the calcium sulfate dihydrate content is larger than or equal to 2.0 g/1, preferably larger than or equal to 2.2 g/l at room temperature.

5. Method according to any of the preceding claims, wherein the calcium sulfate dihydrate pigment has an average particle size in the range of 0.2-5 µ, preferably in the range of 0.5-2 µ.

6. Method according to any of the preceding claims, wherein the calcium sulfate dihydrate pigment has a particle size distribution such that at least 90% of the particles are smaller than 10 µ, preferably at least 90% of the particles are smaller than 6 µ.

7. Method according to any of the preceding claims, wherein the water essentially presaturated in calcium sulfate dihydrate is prepared in that chemical gypsum is used for the presaturation of the water.

8. Method according to claim 7, wherein the chemical gypsum used for the presaturation of the water has an average particle size of more than 10 µ, preferably of more than 20 µ, even more preferably in the range of 30-70 µ.

9. Method according to any of claims 7 or 8, wherein the chemical gypsum used for the presaturation of the water has a particle size distribution such that at most 90% of the particles are smaller than 20 µ, preferably such that at most 90% of the particles are smaller than 100 µ.

10. Method according to any of the preceding claims 7-9, wherein the chemical gypsum has a weight ratio of calcium atoms to sulfur atoms of more than 1:0.7, preferably of more than 1:0.75, more preferably in the range of 1:(0.72-0.8) and wherein the chemical gypsum has a weight ratio of calcium atoms to sulfur atoms of less than 1:0.7, preferably of less than 1:0.65, more preferably in the range of 1:(0.62-0.68).

11. Method according to any of the preceding claims 7-10, wherein the water presaturated in calcium sulfate dihydrate is circulating water of the paper machine which, prior to its use for the preparation of said calcium sulfate dihydrate pigment slurry is presaturated in calcium sulfate dihydrate, and/or is freshwater introduced into the system which, prior to its introduction into the circulating water cycle or prior to its use for the preparation of said calcium sulfate dihydrate pigment slurry is presaturated in calcium sulfate dihydrate.

12. Method according to any of the preceding claims, wherein the water essentially presaturated in calcium sulfate dihydrate is prepared in that coated broke comprising calcium sulfate dihydrate is used for the presaturation of the water.

13. Method according to any of the preceding claims, wherein the high solids content calcium sulfate dihydrate pigment starting slurry has a dry solids content of more than 50%, preferably of more than 60%, most preferably of more than 65%.

14. Method according to any of the preceding claims, wherein the coating colour comprises at least one calcium sulfate dihydrate pigment, preferably in at least 10 parts in dry weight, more preferably in at least 15 parts, most preferably in the range of 60-85 parts in dry weight of the total 100 parts in dry weight of the coating pigment fraction, and wherein for the making of the coating colour water which is essentially presaturated in calcium sulfate dihydrate is used, wherein further preferably the calcium sulfate dihydrate pigment is a ground calcium sulfate dihydrate pigment,
and/ or wherein the filler particles comprise calcium sulfate dihydrate particles or calcium sulfate dihydrate pigment deposited on to fibres or fibre noils in at least 5-40 parts in dry weight, more preferably in at least 8 parts, most preferably in the range of 10-15 parts in dry weight of the total 100 parts in dry weight of the substrate.

15. Method according to any of the preceding claims for the making of a fibre-based paper or board substrate with filler comprising calcium sulfate dihydrate pigment, wherein the calcium sulfate dihydrate pigment is introduced into the papermaking or boardmaking process as a calcium sulfate dihydrate pigment slurry diluted with water which is essentially presaturated in calcium sulfate dihydrate.

16. Method according to any of the preceding claims, wherein the water essentially presaturated in calcium sulfate dihydrate is prepared in that chemical gypsum directly as derived essentially without or only minor purification and/or posttreatment as a by-product from the manufacture of phosphoric acid is used for the presaturation of the water.
